# EUROPEAN PATENT APPLICATION

(11) **EP 4 847 760 A2**
(43) Date of publication of application: **02.12.2026**
(21) Application number: 26182335.5
(22) Date of filing: 01.06.2026
(51) Int. Cl.: F02C 7/275

(54) **MECHANICAL ENERGY STARTER OF AN AIRCRAFT AND METHOD FOR PROVIDING THE SAME**

(30) Priority: 30.05.2025 US 202519223766
(71) Applicant: The Boeing Company, Arlington, VA 22202 (US)
(72) Inventor: Mackin, Steve George, Arlington, 22202 (US); Caraher, James Philippe, Arlington, 22202 (US); Auterman, Joseph, Arlington, 22202 (US); Tutko, Samuel James, Arlington, 22202 (US)
(74) Representative: Witte, Weller & Partner Patentanwälte mbB

(57) **Abstract**

A mechanical energy starter (200) for initiating an APU (202) or a jet engine of an aircraft (100) is disclosed. An energy storage device (210) stores elastic potential energy and then releases the energy as output kinetic energy to rotate a rotor shaft and commence operation of the APU (202) or jet engine. A conversion mechanism (208) transforms input kinetic energy into stored elastic potential energy for starting the engine without the use of electric voltage or current. An actuator remotely controls the starter from the flight deck. In certain embodiments, the energy storage device (210) incorporates a spring, while the conversion mechanism (208) includes a mechanical crank that may be rotated manually or by a direct current gear motor. A control circuit (224) monitors the winding process via a position sensor (226) or a timing circuit (230) to stop the process when a designated threshold of revolutions is reached.

## Description

### BACKGROUND

### Technical Field.

The subject matter described herein relates to aerospace engineering, specifically to starters and methods for auxiliary power units (APUs) and jet engines in aircraft.

### State Of The Art.

Within the field of aerospace engineering, reliable activation of auxiliary power units (APUs) is important for ensuring the continued operation of necessary aircraft functions. Both commercial and military aircraft place significant emphasis on performance, efficiency, and weight management. The APUs are small gas turbine engines that provide power for various aircraft functions while main engines of the aircraft are turned off or not running at full capacity. The APUs provide compressed air (e.g., bleed air) to start main engines of the aircraft, which typically do not have electric starters for starting the main engines. Some APUs generate electricity to power aircraft systems, including cockpit instruments, lighting, and avionics; and supply bleed air to operate air conditioning packs to keep the flight deck or aircraft cabin comfortable before engine startup. Some APUs are used during flight as a backup power source in case of an engine generator failure. However, APUs do not output sufficient thrust to move aircraft.

Given the demanding environments in which aircraft operate - including challenging temperatures, high vibration, and limited available space - engineers are motivated to consider methods that provide consistent and robust activation processes. In many aerospace applications, there is a clear objective to streamline the initiation of power for onboard subsystems. Designers aim to improve operational efficiency and reliability by developing methods that reduce overall system complexity and weight, while at the same time ensure dependable performance. The goal is to achieve an approach that simplifies the configuration of power initiation, minimizes the need for bulky components, and optimizes the deployment of associated circuitry. This emphasis on efficiency and simplicity seeks not only improved functionality but also easier integration in environments where space is at a premium and design trade-offs are often challenging. The drive is toward a solution that meets rigorous operational demands without compromising the overall efficacy of the aircraft systems.

Some known aircraft with APUs rely on electrically powered starters to start or initiate the APUs. These starters rely on batteries and conductive pathways (e.g., wires, cables, and/or conductive runs) that connect the starters with the batteries. A particular challenge arises, however, when the APUs are situated at considerable distances from the batteries within an aircraft. Some aircraft having main engines on the wings of the aircraft (e.g., wing-mounted engine aircraft) have the APUs on the wings with the main engines, but the batteries located within the fuselage of the aircraft. For example, on some military aircraft there can be between forty and sixty feet of separation between the APUs and the batteries.

This spatial separation necessitates the use of elongated conductive pathways that further contribute to overall system weight and complicate the physical routing of wiring in confined spaces. For example, long, heavy copper runs between the APUs and the batteries can be required to ensure sufficiently low electrical resistance between the APUs and the batteries. In such configurations, managing the balance between effective power delivery and minimizing physical interconnections becomes a significant issue. The extended layout not only increases the structural and installation demands but also introduces potential vulnerabilities under challenging environmental conditions where performance reliability can be compromised. These specific considerations highlight the need for approaches that can overcome the difficulties imposed by remote placement and ensure dependable activation without incurring excessive weight or complexity penalties.

Current electrically started APUs tend to introduce significant weight and complexity to aircraft systems, resulting in design challenges in areas where minimizing weight is important, and space is limited. Moreover, many of these existing methods may suffer from performance issues in adverse environmental conditions, impacting their overall effectiveness. The reliance on traditional energy storage mechanisms and heavy interconnection architectures often leads to compromises that affect both installation efficiency and ongoing maintenance.

### SUMMARY OF THE DISCLOSURE

In one embodiment, a mechanical energy starter for initiating an APU or a jet engine of an aircraft is disclosed. The starter comprises an energy storage device configured to store elastic potential energy and then release that energy as output kinetic energy to rotate a rotor shaft and commence operation of the APU or jet engine. The conversion mechanism may be arranged to transform input kinetic energy into stored elastic potential energy, and in some embodiments, the energy storage device may be designed to start the engine without the use of electric voltage or current. An actuator may be provided for remote operation from the flight deck, with the actuator possibly including a solenoid to engage and activate the energy storage device. In certain embodiments, the energy storage device may incorporate a spring, while the conversion mechanism may include a mechanical crank that may be rotated manually or by a direct current gear motor. A control circuit may monitor the winding process - potentially in conjunction with a position sensor that measures angular positions of the crank and/or a timing circuit that tracks the winding duration - to stop the process when a designated threshold of revolutions is reached.

In a further embodiment, a mechanical energy starter for starting an auxiliary power unit (APU) or a jet engine of an aircraft is disclosed, the mechanical energy starter comprising: an energy storage device configured to store and release elastic potential energy for starting the APU or the jet engine; and a conversion mechanism operatively coupled to the energy storage device for converting input kinetic energy into the elastic potential energy that is stored in the energy storage device; wherein the energy storage device is configured to be actuated to output the elastic potential energy that is stored in the energy storage device as output kinetic energy that rotates a rotor shaft of the APU or the jet engine to start the APU or the jet engine. The energy storage device may be configured to output the elastic potential energy as the output kinetic energy that starts the APU or the jet engine without using electric voltage or electric current to start the APU or the jet engine. The mechanical energy starter may further comprise an actuator operatively coupled with the energy storage device, the actuator configured to be remotely activated from a flight deck of the aircraft to remotely start the APU or the jet engine with the output kinetic energy from the energy storage device. The actuator may include a solenoid positioned to engage and activate the energy storage device responsive to the solenoid being activated. The energy storage device may include a spring. The conversion mechanism may include a mechanical crank configured to be rotated to wind the spring. The mechanical energy starter may further comprise a direct current (DC) gear motor coupled with the conversion mechanism, the DC gear motor configured to wind the mechanical crank to provide the input kinetic energy to the conversion mechanism. The mechanical energy starter may still further comprise a control circuit configured to monitor winding of the mechanical crank by the DC gear motor, and to stop winding of the mechanical crank by the DC gear motor responsive to a number of revolutions of the mechanical crank reaching a designated threshold number. Also, the mechanical energy starter may further comprise one or both of (a) a position sensor configured to measure angular positions of the mechanical crank as the mechanical crank is wound or (b) a timing circuit configured to track time, the control circuit configured to communicate with the one or both of the position sensor or the timing circuit to decide when the number of revolutions of the mechanical crank reaches the designated threshold number.

In another embodiment, an auxiliary power unit (APU) starter apparatus in an aircraft is disclosed, as well as the aircraft itself, the APU starter apparatus comprising: an energy storage device having a spring configured to store and release elastic potential energy for starting an APU of the aircraft; and a conversion mechanism having a winding device coupled with the spring and configured to be rotated to receive input kinetic energy, the spring being wound by the input kinetic energy to store the elastic potential energy, wherein the spring is configured to be actuated to release the elastic potential energy that is stored in the spring as output kinetic energy that rotates a rotor shaft of the APU to start the APU. The energy storage device may be configured to rotate the rotor shaft of the APU to start the APU without using electric energy. The winding device may include a crank configured to be manually wound to receive the input kinetic energy. The winding device may include a self-winding mechanism configured to be rotated and receive the input kinetic energy from motion or vibration of the aircraft. The winding device may be a direct current (DC) gear motor configured to wind the spring with a predetermined torque output. The APU starter apparatus may further comprise an actuator that includes a solenoid configured to be actuated to engage the spring and cause the spring to release the elastic potential energy that is stored in the spring as the output kinetic energy.

Further, there is disclosed a method for starting an auxiliary power unit (APU) or a jet engine onboard an aircraft using stored elastic potential energy, the method comprising: coupling an energy storage device to the APU or the jet engine, the energy storage device configured to store elastic potential energy and to release the elastic potential energy as output kinetic energy for starting the APU or the jet engine; and coupling a conversion mechanism with the energy storage device, the conversion mechanism configured to convert input kinetic energy into the elastic potential energy that is stored in the energy storage device. The energy storage device may be coupled with the APU or the jet engine so that no electric voltage or electric current is output by the energy storage device to start the APU or the jet engine. The method may further comprise: coupling a mechanical actuator with the energy storage device so the mechanical actuator is remotely activated from a flight deck of the aircraft to remotely start the APU or the jet engine with the output kinetic energy from the energy storage device. The method may still further comprise: coupling a direct current (DC) gear motor with the conversion mechanism so the DC gear motor winds a mechanical crank of the conversion mechanism to provide the input kinetic energy to the conversion mechanism. Also, the method may further comprise: operatively coupling at least one of a position sensor with the mechanical crank or a timing circuit with the DC gear motor, the position sensor configured to measure angular positions of the mechanical crank as the mechanical crank is wound, the timing circuit configured to track time that the DC gear motor is winding the mechanical crank.

In another embodiment, an APU starter apparatus is presented. This apparatus comprises an energy storage device having a spring for storing and releasing elastic potential energy to start the APU and a conversion mechanism including a winding device coupled to the spring. The winding device may be configured as a manually operated crank, a self-winding mechanism energized by motion or vibration of the aircraft, or a direct current gear motor that winds the spring with a predetermined torque. In some configurations, the energy storage device may rotate the rotor shaft to initiate the APU without the need for electric energy, and an actuator incorporating a solenoid may be utilized to engage the spring and trigger the release of stored energy.

In yet another embodiment, a method for starting an APU or a jet engine onboard an aircraft using stored elastic potential energy is disclosed. The method comprises coupling an energy storage device to the engine in a manner that allows the storage of elastic potential energy, which is subsequently released as kinetic energy to rotate a rotor shaft and initiate engine operation. A conversion mechanism is connected with the energy storage device to transform input kinetic energy into stored elastic potential energy. In some embodiments, the energy storage device may be configured to function without generating electric voltage or current, and a remote mechanical actuator may be connected for initiating the start sequence from the flight deck. The method may further involve employing a direct current gear motor to wind a mechanical crank and monitoring the winding process-either by measuring angular positions with a position sensor or tracking time with a timing circuit-to determine when a designated threshold has been reached.

### BRIEF DESCRIPTION OF THE DRAWINGS

Figure 1 illustrates one example of an aircraft.
Figure 2 schematically illustrates one example of a mechanical energy starter.
Figure 3 illustrates one example of an APU and the mechanical energy starter shown in Figure 2.
Figure 4 illustrates another example of the mechanical energy starter shown in Figure 2.
Figure 5 illustrates one example of the mechanical energy starter connected with a jet fuel starter for a jet engine.
Figure 6 illustrates a flowchart of one example of a method for providing a mechanical energy starter for an APU or a jet engine.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

In the field of aerospace engineering, the startup process of APUs and jet engines in aircraft presents significant challenges, particularly concerning weight and efficiency. Some known systems heavily rely on large batteries and extensive wiring to deliver the necessary power to start the APUs and jet engines. This setup is not only cumbersome but also adds considerable weight to the aircraft, which can adversely affect overall performance and fuel efficiency. Additionally, the reliance on batteries introduces further complications, as battery performance can degrade significantly in cold weather conditions, leading to reduced cranking capability and potential startup failures.

The existing technology in APU starters generally involves the use of electric motors powered by batteries. These starters require substantial copper wires to transmit current from the batteries, often located in the fuselage, to the APUs, which may be positioned far out on the wings or in the tail of the aircraft. This extensive wiring not only adds to the weight of the aircraft but also presents challenges in terms of wire routing, particularly in areas with limited space. Additionally, the need for large batteries and durable wiring systems leads to increased maintenance requirements and costs, as well as potential reliability issues in unfavorable weather conditions.

The present approach addresses these challenges by introducing a novel starter and method for providing the same that removes the dependency on large batteries and extensive wiring systems. The starter and method use a mechanical energy starter having a spring mechanism to store and release elastic potential energy. The spring can be wound using various methods, including manual cranking, a small and/or low speed direct current (DC) gear motor, and/or through energy harvesting the motion and vibrations of the aircraft. This starter significantly reduces the weight and complexity of the APU and/or jet engine starter setup, offering a more efficient and reliable solution tailored for aerospace applications. This approach not only simplifies the electrical system of the aircraft but also enhances the aircraft's performance by reducing the overall weight and improving startup reliability in cold weather conditions.

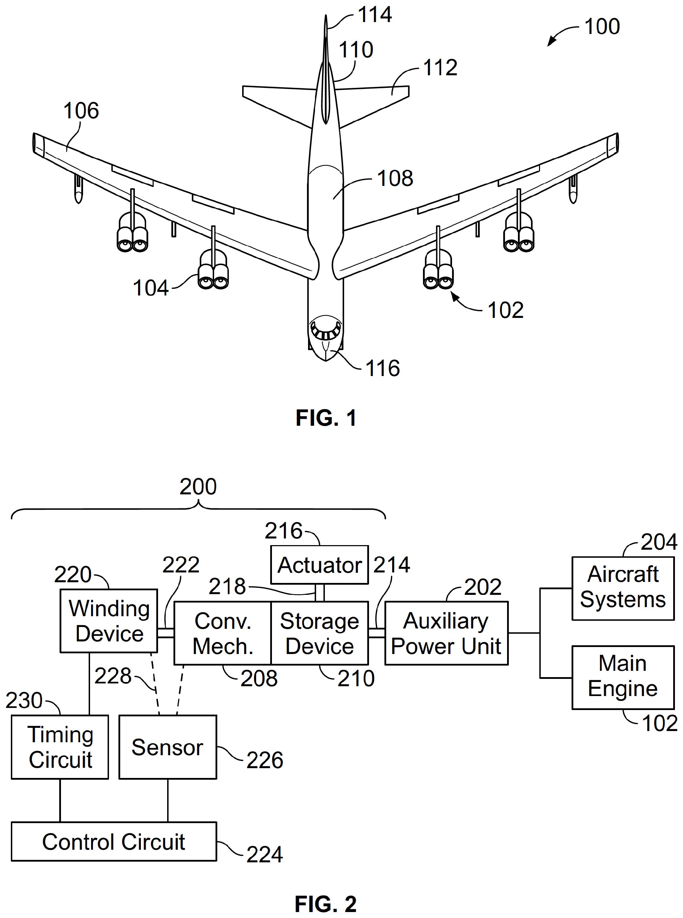

Figure 1 illustrates one example of an aircraft 100. The aircraft 100 is equipped with a propulsion system 102 that includes main engines 104. The main engines 104 operate to generate the thrust needed for flight. The main engines 104 can be turbofan engines, or turbojet or jet engines. The engines 104 are mounted on wings 106, which are part of the aircraft's aerodynamic structure and provide lift during flight. The wings 106 support the engines 104 and ensure efficient propulsion and stability. The aircraft 100 features a fuselage 108 that serves as the main body of the aircraft and houses various sections and systems. The fuselage 108 accommodates an internal cabin or flight deck 116, where pilots and operators control the aircraft. An empennage 110 is located at the rear of the aircraft 100, and provides stability and control during flight. The empennage 110 includes horizontal stabilizers 112 and a vertical stabilizer 114. The horizontal stabilizers 112 help maintain the aircraft's pitch, while the vertical stabilizer 114 assists in controlling yaw, ensuring directional stability. The aircraft 100 is designed to accommodate various configurations, allowing for flexibility in size, shape, and operational capabilities. The propulsion system 102, including the engine 104, can be adapted to different mounting positions, such as on the fuselage 108 or the empennage 110, depending on specific design requirements.

The main engines 104 are started using APUs. The APU is turned on (using mechanical energy and not electricity or electric energy, as described herein). The APU generates electricity and high-pressure bleed air while operating. The APU supplies this compressed bleed air to an air turbine starter (ATS) of the engine 104. The ATS uses the high-pressure bleed air to spin the high-pressure compressor of the engine 104. As the compressed air flows through the compressor, it causes the N2 or core compressor to begin spinning. This rotation brings the engine 104 up to a speed where fuel can be introduced safely. Once the engine 104 reaches the required starter revolutions per minute (RPM) threshold, a fuel control unit of the engine 104 meters fuel into the combustion chamber. The igniters then spark, initiating combustion of the engine 104. As the combustion process stabilizes, the engine 104 begins generating its own compressed air and electrical power. At this point, the APU disengages, and the engine 104 continues to run independently of the APU.

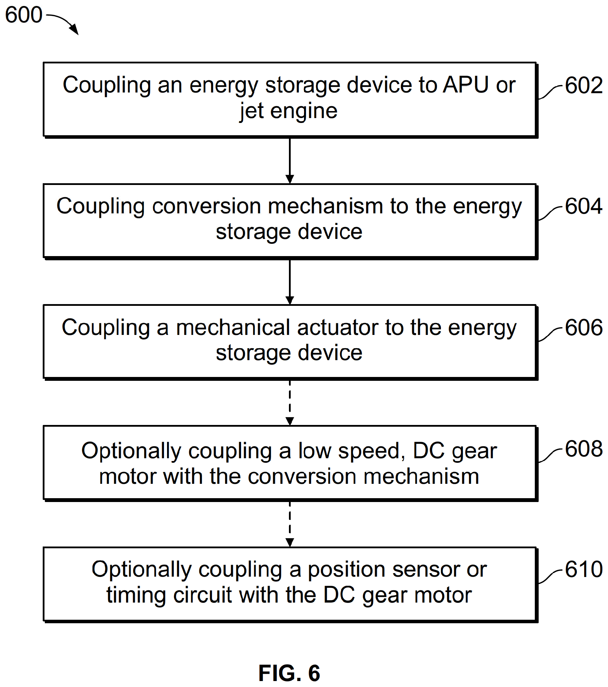

Figure 2 illustrates one example of a mechanical energy starter 200 for an APU 202. The mechanical energy starter 200 starts or initiates the APU 202, which starts the engine 104, without the mechanical energy starter 200 generating, receiving, storing, or outputting any electric energy (e.g., electric current or voltage) to the APU 202 to start the APU 202. Optionally, the mechanical energy starter 200 starts or initiates a jet engine 104, as described in connection with Figure 6.

The mechanical energy starter 200 includes an energy storage device 210. The energy storage device 210 represents one or more springs that are twisted or wound to convert mechanical kinetic energy to mechanical potential energy that is stored in the spring(s). For example, the springs store the potential energy through deformation of the material forming the springs. This deformation includes compression, extension, or torsion for different springs. The deformation of the spring is kinetic energy, and the spring converts this kinetic energy into stored or elastic potential energy. The spring is able to store the elastic potential energy based on the principle of elasticity, which is the ability of the material of the spring to return to its original shape after being deformed. When the spring in the energy storage device 210 is compressed or extended, work is done on the spring, and the mechanical energy is converted into and stored in the deformed spring in the form of elastic potential energy. The amount of energy stored is proportional to the displacement from the equilibrium position of the spring. When the force that is applied to the spring to deform the spring is removed, the energy stored in the spring is released as the spring returns to the equilibrium position. This release of energy is kinetic energy that is used to perform work, such as starting the APU.

In the illustrated example, the storage device 210 is connected with the APU 202 by a shaft or linkage 214. The storage device 210 releases the elastic potential energy stored in the deformed spring by the deformed spring returning to its equilibrium position and rotating the shaft or linkage 214. This is the storage device 210 converting and outputting the stored elastic potential energy into the kinetic energy that rotates the shaft or linkage 214. The shaft or linkage 214 is connected with the compressor and turbine of the APU 202, and rotation of the shaft or linkage 214 also rotates the compressor and turbine of the APU 202. This allows the APU 202 to reach the speed required for self-sustained operation. Once started in this way, the APU 202 generates electric energy for starting the main engine 104 of the aircraft 100 and/or powering other aircraft systems 204, such as lighting systems, avionics systems, and other electronic equipment, as well as providing compressed air for environmental control systems (air conditioning and cabin pressurization). Additionally, the main engines of the aircraft can consume pneumatic energy generated by the APU 202 to start the main engines. The mechanical energy starter 200 is designed to operate without the need for electric voltage or electric current. This eliminates the dependency on batteries and extensive wiring systems traditionally used in aircraft. This design significantly reduces the weight and complexity of the aircraft's electrical system.

A conversion mechanism 208 ("Conv. Mech." in Figure 2) is operatively coupled to the energy storage device 210 and is responsible for converting input kinetic energy into the elastic potential energy that is stored in the energy storage device 210. As used herein, the term "operatively" connected, coupled, or the like, refers to a relationship between components where the components are linked in such a way that the components work together to perform a specific function or operation. The connection can be direct or indirect; mechanical, wired, or wireless; or the like; for the transfer of signals, energy, movement, or information as needed for the components to interact and achieve the desired outcome. This conversion mechanism 208 represents one or more mechanical cranks, levers, or the like, which is or are connected with the spring(s) in the energy storage device 210. Movement (e.g., rotation) of the conversion mechanism 208 winds the spring(s) within the energy storage device 210. This converts the kinetic energy from moving the conversion mechanism 208 into elastic potential energy that is stored in the spring(s) of the energy storage device 210.

In one embodiment, the conversion mechanism 208 is manually actuated (e.g., moved, cranked, or rotated) to wind and input kinetic energy for storage as elastic potential energy in the energy storage device 210. In another embodiment, the conversion mechanism 208 is coupled with a winding device 220 that provides the input kinetic energy into the energy storage device 210. The winding device 220 is connected with the conversion mechanism 208 by one or more linkages 222 (e.g., shafts, gears, levers, etc.). The winding device 220 is a low-speed DC gear motor in one example. The low-speed DC gear motor is a motor powered by DC (e.g., from a battery or generator), and operates (e.g., rotates) at slower speeds. The motor operates at RPMs that are too slow to generate thrust for the aircraft 100. For example, the motor operates at lower rotational speeds while providing high torque. These speeds may be, for example, a few (e.g., less than ten) RPMs to five hundred RPMs. Using such a low speed DC gear motor as the winding device 220 that slowly winds the storage device 210 over time means that the motor, the power to spin the motor, and the battery performance and subsequent wiring to support the motor can be significantly smaller than an electric motor wired and installed to directly start the APU 202 (with the winding device 220).

The motor is powered by batteries and/or a generator to create kinetic energy that rotates the conversion mechanism 208 to store elastic potential energy in the storage device 210. While the motor is electrically powered in this way, the conversion mechanism 208 still converts the created kinetic energy output by the motor into elastic potential energy in the spring(s) of the storage device 210, which is then used to start the APU 202, without electric energy. That is, the storage device 210 still starts the APU 202 without delivering, producing, creating, or conducting any electric current (e.g., alternating current) or voltage (e.g., DC) to the APU 202.

In another example, the winding device 220 is a self-winding device that automatically winds the conversion mechanism 208 using external motion or energy sources, and without requiring manual intervention. The winding device 220 is an energy harvester in that the winding device 220 harvests kinetic energy from motion, such as vibrations, accelerations, or other movements of the aircraft 100. The winding device 220 transfers or re-directs this harvested kinetic energy into rotation of the conversion mechanism 208, thereby converting the harvested kinetic energy into the potential elastic energy stored in the energy storage device 210. The harvesting winding device 220 can represent a rotor, rotating weight, piezoelectric device, etc. that moves with movement (e.g., vibrations or accelerations) of the aircraft 100. This rotor is coupled with the spring(s) of the energy storage device 210 so that the rotor winds the spring(s) and stores energy in the spring(s). With respect to piezoelectric devices, the winding device 220 includes piezoelectric materials that generate electric energy when subjected to mechanical stress or vibration. This electric energy is used to power a low-speed DC gear motor that winds the conversion device 208 to store energy in the storage device 210.

A control circuit 224 represents hardware circuitry that includes and/or is connected with one or more processors (e.g., one or more microprocessors, integrated circuits, application-specific integrated circuits, field programmable gate arrays, etc.) that perform the operations described herein in connection with the control circuit 224. The control circuit 224 monitors winding of the conversion mechanism 208 by the winding device 220. In one embodiment, the conversion mechanism 208 is only wound by hand, the winding device 220 is not included in the starter 200, and the control circuit 224 does not monitor rotation of the conversion mechanism 208.

The control circuit 224 is operatively connected with the winding device 220 to control operation of the winding device 220. For example, the control circuit 224 and winding device 220 are connected by wires and/or wireless connections so that the control circuit 224 generates and sends signals to the winding device 220 to direct the winding device 220 to start winding the conversion mechanism 208, to continue winding the conversion mechanism 208, and to stop winding the conversion mechanism 208. The control circuit 224 monitors automatic winding of the conversion mechanism 208 by the winding device 220 to ensure that the conversion mechanism 208 is not overwound past the point where the spring(s) in the storage device 210 are permanently damaged or destroyed.

In one example, the control circuit 224 includes or is connected with a timing circuit 230. Like the control circuit 224, the timing circuit 230 represents hardware circuitry that includes and/or is connected with one or more processors that perform the operations of the timing circuit 230. In one embodiment, the control circuit 224 and the timing circuit 230 use or share one or more of the same processors and/or circuitry. In another embodiment, the control circuit 224 and the timing circuit 230 use completely different processors and circuitry.

The timing circuit 230 operates as a clock or timer that tracks how long the winding device 220 is rotating or winding the conversion mechanism 208. The winding device 220 operates at a fixed rotational speed or the control circuit 224 controls the rotational speed of the winding device 220. The control circuit 224 receives the duration of how long the winding device 220 has been winding the conversion mechanism 208 from the timing circuit 230. The control circuit 224 multiples the rotational rate or speed of the winding device 220 by the duration that the winding device 220 has been winding the conversion mechanism to calculate a number of windings of the conversion mechanism 208. Once this number of windings reaches a predesignated threshold number of windings (e.g., associated with an upper limit or maximum safety limit to avoid permanently deforming or damaging the spring(s) in the storage device 210), the control circuit 224 implements a responsive action. In one example, the control circuit 224 sends a signal to the winding device 220 to stop or shut down the winding device 220 from continuing to wind the conversion mechanism 208. In another example, the control circuit 224 sends a signal to the winding device 220 or another component to decouple the winding device 220 from the conversion mechanism 208 (e.g., by another motor moving the winding device 220 away from the linkage 222 and/or conversion mechanism 208).

In another example, the control circuit 224 includes or is connected with a position sensor 226 ("Sensor" in Figure 2). This position sensor 226 represents an angular position sensor that measures the rotation angle of the linkage 222 between the winding device 220 and the conversion mechanism 208 and/or the rotation angle of the conversion mechanism 208. The position sensor 226 monitors this angle to count the number of rotations, revolutions, or windings of the conversion mechanism 208 by the winding device 220. For example, the position sensor 226 increments a count of windings each time the position sensor 226 measures the rotation angle of a reference location within a field of view 228 of the position sensor 226 as making a complete cycle. This reference location can be a marking, surface (reflective, magnetic, or otherwise), or the like, which rotates or moves. Examples of the position sensor 226 include a camera, a rotary encoder, a Hall effect sensor, a resolver sensor, a potentiometer, or the like. The position sensor 226 outputs positions or counts of the windings of the linkage 222 or conversion mechanism 208 to the control circuit 224. Once the number or count of windings reaches the predesignated threshold number of windings, the control circuit 224 implements a responsive action. In one example, the control circuit 224 sends a signal to the winding device 220 to stop or shut down the winding device 220 from continuing to wind the conversion mechanism 208. In another example, the control circuit 224 sends a signal to the winding device 220 or another component to decouple the winding device 220 from the conversion mechanism 208.

The starter 200 optionally includes an actuator 216 that controls the storage device 210 to release the stored elastic potential energy as output kinetic energy. As described above, this output kinetic energy rotates a shaft or linkage 214 with the APU 202 to start the APU 202 without electric current or voltage being used. The actuator 216 is able to be remotely activated, such as from pilots or operators in the flight deck or cabin 116 of the aircraft 100.

The energy storage device 210 is designed to be actuated by an actuator 216, which can be remotely activated from the flight deck of the aircraft. This remote activation allows for the APU 202 or the jet engine to be started without the need for direct manual intervention. For example, the energy storage device 210 includes a linkage 218 that is engaged by the actuator 216. This linkage 218 can be a lever, switch, button, or the like. The actuator 216 engages and moves the linkage 218 to cause the storage device 210 to output the stored elastic potential energy as kinetic energy that starts the APU 202. In one example, the actuator 216 is a solenoid positioned to engage and activate the linkage 218 to activate the energy storage device 210. The solenoid can extend outward to engage and move the linkage 218, or can retract inward (while being connected to the linkage 218) to move the linkage 218. This configuration allows for the controlled release of the stored elastic potential energy, ensuring that the APU 202 or the jet engine is started.

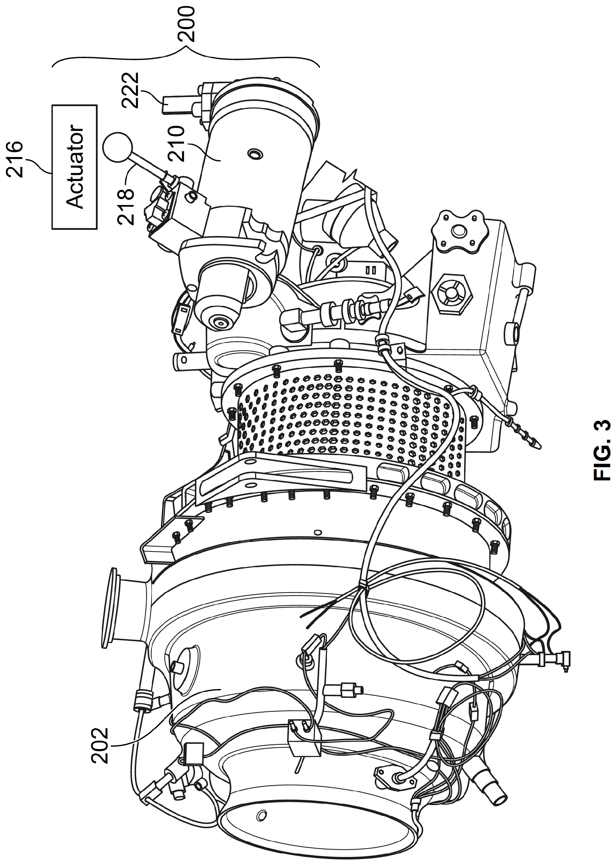

Figure 3 illustrates one example of the starter 200 shown in Figure 2 connected with the APU 202 shown in Figure 2. As shown, the energy storage device 210 is mounted to the outside housing of the APU 202. The linkage 218 is a lever that is pulled or pushed to one position (e.g., the position shown in Figure 3) to store the elastic potential energy in the spring(s) of the energy storage device 210, and is pulled or pushed to another position to release this elastic potential energy as kinetic energy. The actuator 216 is positioned to actuate the linkage 218. For example, the solenoid is positioned such that the solenoid extends outward to contact the move the linkage 218 (e.g., to the right in Figure 3) to activate the energy storage device 210.

The linkage 214 that connects the energy storage device 210 and the APU 202 can be on a back or rear side of the energy storage device 210 and coupled with the APU 202 via gears, linkages, shafts, etc. The linkage 222 that is manually rotated or rotated by the winding device 220 is a paddle in the illustrated example. A tool or the DC gear motor is coupled with the paddle to rotate the paddle and wind the spring(s) in the energy storage device 210. For example, the rotor of the DC gear motor may be welded or otherwise coupled with the linkage 222 such that operation of the DC gear motor rotates the linkage 222 and winds the spring(s) in the energy storage device 210.

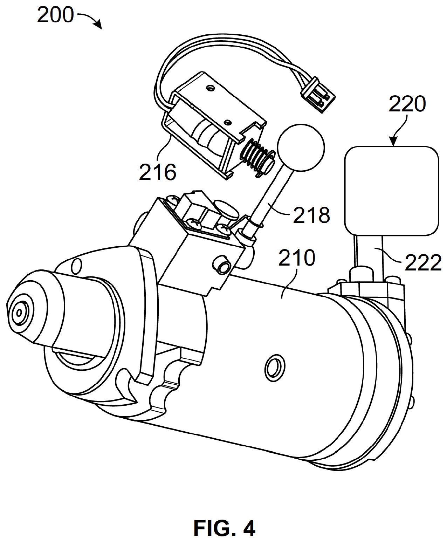

Figure 4 illustrates one example of the energy storage device 210 shown in Figure 2. The actuator 216 is a solenoid in the illustrated example. This solenoid is positioned near the linkage 218 such that, when a piston 400 of the solenoid extends or projects out, the piston 400 contacts and pushes the linkage 218. The linkage 218 is connected to the spring(s) in the energy storage device 210 such that the linkage 218 keeps the springs in a wound state. Pushing the linkage 218 with the piston 400 of the solenoid causes the linkage 218 to release the spring(s) and unwind, thereby converting the elastic potential energy stored in the spring(s) into kinetic energy that is output by the energy storage device 210 (and start the APU 202 via the linkage 214). The solenoid may be controlled by a pilot or operator in the flight deck 116 of the aircraft 100. For example, a button, lever, switch, or the like, may be connected with the solenoid via wired and/or wireless connections such that the pilot or operator remotely controls operation of the solenoid (and starting the APU 202) from the flight deck 116.

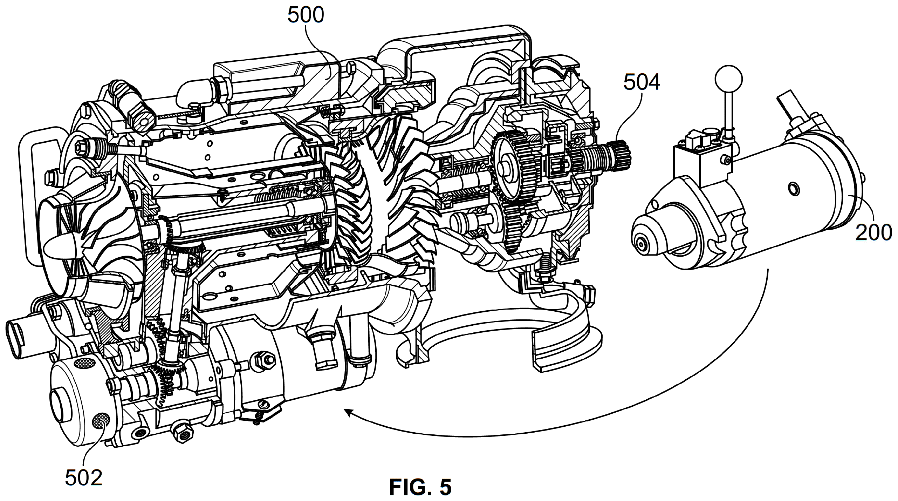

Figure 5 illustrates one example of the mechanical energy starter 200 connected with a jet engine starter 500 for a jet engine. The jet engine starter 500 is used to start the jet engine using a hydraulic starting motor 502. The hydraulic starting motor 502 uses hydraulic fluid to generate mechanical energy needed to rotate components of the jet engine starter 500. The hydraulic starting motor 502 is connected to a hydraulic power source, such as a hydraulic pump and reservoir. The pump pressurizes the hydraulic fluid to create the force needed to drive the motor 502. The hydraulic starting motor 502 is mechanically connected to a shaft 504 of the jet engine 500 through gears, couplings, linkages, etc. This connection allows the motor 502 to transfer rotational energy directly to the jet engine starter 500. When activated, pressurized hydraulic fluid flows into the starting motor 502 and causes the motor 502 to rotate. This rotation is transferred to the shaft 504 of the jet engine starter 500 and provides the initial mechanical energy needed to overcome inertia and start the compressor and turbine of the jet engine starter 500.

The hydraulic starting motor 502 continues to rotate the shaft 504 of the jet engine starter 500 until the jet engine starter 500 reaches an idle speed necessary for self-sustained operation. At this speed, the fuel combustion process of the jet engine starter 500 takes over from the starting motor 502. That is, the fuel combustion by the jet engine starter 500 provides the energy to rotate the shaft 504 instead of the starting motor 502. Once the jet engine starter 500 is self-sustaining, the hydraulic starting motor 502 disengages from the engine shaft 504, allowing the jet engine starter 500 to continue running.

The mechanical energy starter 200 is used to replace the hydraulic starting motor 502 in one embodiment. The hydraulic starting motor 502 is disconnected from the jet engine shaft 504, and the linkage 214 of the mechanical energy starter 200 is connected with this shaft 504. The energy storage device 210 starts the jet engine starter 500 by providing the initial mechanical energy required to rotate the compressor and turbine of the jet engine starter 500. This allows the jet engine starter 500 to reach the speed necessary for self-sustained operation, similar to the hydraulic starting motor 502 described above.

The spring(s) in the energy storage device 210 is or are wound to store elastic potential energy. This winding can be achieved through various mechanisms, including manual cranking, a DC gear motor, or a self-winding mechanism responsive to aircraft motion, as described above. When the jet engine starter 500 needs to be started, the stored energy in the spring(s) is released. This release is controlled by the actuator 216, such as a solenoid, which engages the spring mechanism to initiate the energy transfer. The released energy is converted into kinetic energy, which is used to rotate the shaft 504 of the jet engine starter 500. This initial rotation is crucial for overcoming the inertia of the jet engine starter 500 and starting the compressor and turbine of the jet engine starter 500. The energy storage device 210 provides rotational force until the jet engine starter 500 reaches an idle speed, where fuel combustion process of the jet engine starter 500 can take over. At this point, the jet engine starter 500 can maintain its operation independently of the mechanical energy starter 200. By using a mechanical energy storage device like a spring, the starter 200 can start the jet engine starter 500 without relying on electrical or pneumatic systems, offering a lightweight and efficient alternative for engine startup.

Figure 6 illustrates a flowchart of one example of a method 600 for adding a mechanical energy starter to an APU or jet engine starter. The method 600 is used to connect the starter 200 with the APU 202 or jet engine starter 500 as described herein. At 602, an energy storage device is connected to the APU or the jet engine starter. The energy storage device is designed to store elastic potential energy and to release the elastic potential energy as output kinetic energy for starting the APU or the jet engine, as described herein. This establishes the primary energy source for the APU or engine starting process, thereby eliminating the need for traditional battery systems and thereby reducing the overall weight and complexity of the electrical system of the aircraft.

At 604, a conversion mechanism is coupled with the energy storage device. The conversion mechanism converts input kinetic energy into the elastic potential energy that is stored in the energy storage device. This allows the spring(s) of the energy storage device to be wound and charged with energy that can later be released to initiate the starting process of the APU or jet engine.

At 606, a mechanical actuator is coupled to the energy storage device. The mechanical actuator is remotely activated from a flight deck of the aircraft to remotely start the APU or the jet engine with the output kinetic energy from the energy storage device, as described above. This provides the pilot or flight crew with the ability to control the starting process from the cockpit, enhancing the operational convenience and safety of the aircraft.

At 608, a low-speed, DC gear motor is coupled with the conversion mechanism. Optionally, the method 600 does not include this step. The DC gear motor is used to wind a mechanical crank of the conversion mechanism to provide the input kinetic energy to the conversion mechanism 208. This optional step allows for an automated winding process, which can be particularly useful in scenarios where manual winding is impractical or when the motion and vibrations of the aircraft are insufficient to wind the spring(s) of the energy storage device.

At 610 a position sensor or a timing circuit is coupled with the DC gear motor. Optionally, the method 600 does not include this step. The position sensor measures angular positions of the mechanical crank as the mechanical crank is wound, while the timing circuit tracks the time that the DC gear motor is winding the mechanical crank. These components ensure that the energy storage device is wound to the correct tension, preventing over-winding and ensuring optimal performance of the mechanical energy starter. The control circuit communicates with the position sensor or the timing circuit to decide when the number of revolutions of the mechanical crank reaches the designated threshold number, thereby stopping the winding process at the appropriate time, as described above.
Further, the disclosure comprises examples according to the following clauses:
Clause 1: A mechanical energy starter for starting an APU or a jet engine of an aircraft, the mechanical energy starter comprising: an energy storage device configured to store and release elastic potential energy for starting the APU or the jet engine; and a conversion mechanism operatively coupled to the energy storage device for converting input kinetic energy into the elastic potential energy that is stored in the energy storage device, wherein the energy storage device is configured to be actuated to output the elastic potential energy that is stored in the energy storage device as output kinetic energy that rotates a rotor shaft of the APU or the jet engine to start the APU or the jet engine.
Clause 2: The mechanical energy starter of Clause 1, wherein the energy storage device is configured to output the elastic potential energy as the output kinetic energy that starts the APU or the jet engine without using electric voltage or electric current to start the APU or the jet engine (e.g., to directly start, or to directly impart the rotational energy necessary or needed to start the APU or jet engine).
Clause 3: The mechanical energy starter of Clause 1 or 2, further comprising: an actuator operatively coupled with the energy storage device, the actuator configured to be remotely activated from a flight deck of the aircraft to remotely start the APU or the jet engine with the output kinetic energy from the energy storage device.
Clause 4: The mechanical energy starter of Clause 3, wherein the actuator includes a solenoid positioned to engage and activate the energy storage device responsive to the solenoid being activated.
Clause 5: The mechanical energy starter of any one of Clauses 1 to 4, wherein the energy storage device includes a spring.
Clause 6: The mechanical energy starter of Clause 5, wherein the conversion mechanism includes a mechanical crank configured to be rotated to wind the spring.
Clause 7: The mechanical energy starter of Clause 6, further comprising: a direct current (DC) gear motor coupled with the conversion mechanism, the DC gear motor configured to wind the mechanical crank to provide the input kinetic energy to the conversion mechanism.
Clause 8: The mechanical energy starter of Clause 7, further comprising: a control circuit configured to monitor winding of the mechanical crank by the DC gear motor, and to stop winding of the mechanical crank by the DC gear motor responsive to a number of revolutions of the mechanical crank reaching a designated threshold number.
Clause 9: The mechanical energy starter of Clause 8, further comprising one or both of (a) a position sensor configured to measure angular positions of the mechanical crank as the mechanical crank is wound or (b) a timing circuit configured to track time, the control circuit configured to communicate with the one or both of the position sensor or the timing circuit to decide when the number of revolutions of the mechanical crank reaches the designated threshold number.
Clause 10: An APU starter apparatus in an aircraft, the APU starter apparatus comprising: an energy storage device having a spring configured to store and release elastic potential energy for starting an APU of the aircraft; and a conversion mechanism having a winding device coupled with the spring and configured to be rotated to receive input kinetic energy, the spring being wound by the input kinetic energy to store the elastic potential energy, wherein the spring is configured to be actuated to release the elastic potential energy that is stored in the spring as output kinetic energy that rotates a rotor shaft of the APU to start the APU.
Clause 11: The APU starter apparatus of Clause 10, wherein the energy storage device is configured to rotate the rotor shaft of the APU to start the APU without using electric energy.
Clause 12: The APU starter apparatus of Clause 10 or 11, wherein the winding device includes a crank configured to be manually wound to receive the input kinetic energy.
Clause 13: The APU starter apparatus of any one of Clauses 10 to 12, wherein the winding device includes a self-winding mechanism configured to be rotated and receive the input kinetic energy from motion or vibration of the aircraft.
Clause 14: The APU starter apparatus of any one of Clauses 10 to 13, wherein the winding device is a direct current (DC) gear motor configured to wind the spring with a predetermined torque output.
Clause 15: The APU starter apparatus of any one of Clauses 10 to 14, further comprising: an actuator that includes a solenoid configured to be actuated to engage the spring and cause the spring to release the elastic potential energy that is stored in the spring as the output kinetic energy.
Clause 16: A method for starting an APU or a jet engine onboard an aircraft using stored elastic potential energy, the method comprising: coupling an energy storage device to the APU or the jet engine, the energy storage device configured to store elastic potential energy and to release the elastic potential energy as output kinetic energy for starting the APU or the jet engine; and coupling a conversion mechanism with the energy storage device, the conversion mechanism configured to convert input kinetic energy into the elastic potential energy that is stored in the energy storage device.
Clause 17: The method of Clause 16, wherein the energy storage device is coupled with the APU or the jet engine so that no electric voltage or electric current is output by the energy storage device to start the APU or the jet engine.
Clause 18: The method of Clause 16 or 17, further comprising: coupling a mechanical actuator with the energy storage device so the mechanical actuator is remotely activated from a flight deck of the aircraft to remotely start the APU or the jet engine with the output kinetic energy from the energy storage device.
Clause 19: The method of any one of Clauses 16 to 18, further comprising: coupling a DC gear motor with the conversion mechanism so the DC gear motor winds a mechanical crank of the conversion mechanism to provide the input kinetic energy to the conversion mechanism.
Clause 20: The method of Clause 18, further comprising: operatively coupling at least one of a position sensor with the mechanical crank or a timing circuit with the DC gear motor, the position sensor configured to measure angular positions of the mechanical crank as the mechanical crank is wound, the timing circuit configured to track time that the DC gear motor is winding the mechanical crank.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A mechanical energy starter (200) for starting an auxiliary power unit (APU) (202) or a jet engine of an aircraft (100), the mechanical energy starter (200) comprising:
an energy storage device (210) configured to store and release elastic potential energy for starting the APU (202) or the jet engine; and
a conversion mechanism (208) operatively coupled to the energy storage device (210) for converting input kinetic energy into the elastic potential energy that is stored in the energy storage device (210),
wherein the energy storage device (210) is configured to be actuated to output the elastic potential energy that is stored in the energy storage device (210) as output kinetic energy that rotates a rotor shaft of the APU (202) or the jet engine to start the APU (202) or the jet engine.

2. The mechanical energy starter (200) of claim 1, wherein the energy storage device (210) is configured to output the elastic potential energy as the output kinetic energy that starts the APU (202) or the jet engine without using electric voltage or electric current to start the APU (202) or the jet engine.

3. The mechanical energy starter (200) of claim 1 or 2, further comprising:
an actuator operatively coupled with the energy storage device (210), the actuator configured to be remotely activated from a flight deck of the aircraft to remotely start the APU (202) or the jet engine with the output kinetic energy from the energy storage device (210), wherein preferably the actuator includes a solenoid positioned to engage and activate the energy storage device (210) responsive to the solenoid being activated.

4. The mechanical energy starter (200) of any one of claims 1 to 3, wherein the energy storage device (210) includes a spring.

5. The mechanical energy starter (200) of claim 4, wherein the conversion mechanism (208) includes a mechanical crank configured to be rotated to wind the spring,
wherein the mechanical energy starter (200) preferably comprises further at least one of:
a direct current (DC) gear motor coupled with the conversion mechanism (208), the DC gear motor configured to wind the mechanical crank to provide the input kinetic energy to the conversion mechanism (208);
a control circuit (224) configured to monitor winding of the mechanical crank by a, or the, DC gear motor, and to stop winding of the mechanical crank by the DC gear motor responsive to a number of revolutions of the mechanical crank reaching a designated threshold number; and/or
one or both of (a) a position sensor (226) configured to measure angular positions of the mechanical crank as the mechanical crank is wound or (b) a timing circuit (230) configured to track time,
the control circuit (224) configured to communicate with the one or both of the position sensor (226) or the timing circuit (230) to decide when the number of revolutions of the mechanical crank reaches the designated threshold number.

6. An auxiliary power unit (APU) (202) starter apparatus in an aircraft (100), the APU (202) starter apparatus comprising:
an energy storage device (210) having a spring configured to store and release elastic potential energy for starting an APU (202) of the aircraft; and
a conversion mechanism (208) having a winding device coupled with the spring and configured to be rotated to receive input kinetic energy, the spring being wound by the input kinetic energy to store the elastic potential energy,
wherein the spring is configured to be actuated to release the elastic potential energy that is stored in the spring as output kinetic energy that rotates a rotor shaft of the APU (202) to start the APU (202).

7. The APU (202) starter apparatus of claim 6, wherein the energy storage device (210) is configured to rotate the rotor shaft of the APU (202) to start the APU (202) without using electric energy.

8. The APU (202) starter apparatus of claim 6 or 7, wherein the winding device includes a crank configured to be manually wound to receive the input kinetic energy.

9. The APU (202) starter apparatus of any one of claims 6 to 8, wherein the winding device includes a self-winding mechanism configured to be rotated and receive the input kinetic energy from motion or vibration of the aircraft.

10. The APU (202) starter apparatus of any one of claims 6 to 9, wherein the winding device is a direct current (DC) gear motor configured to wind the spring with a predetermined torque output.

11. The APU (202) starter apparatus of any one of claims 6 to 10, further comprising:
an actuator that includes a solenoid configured to be actuated to engage the spring and cause the spring to release the elastic potential energy that is stored in the spring as the output kinetic energy.

12. A method for starting an auxiliary power unit (APU) (202) or a jet engine onboard an aircraft (100) using stored elastic potential energy, the method comprising:
coupling an energy storage device (210) to the APU (202) or the jet engine, the energy storage device (210) configured to store elastic potential energy and to release the elastic potential energy as output kinetic energy for starting the APU (202) or the jet engine; and
coupling a conversion mechanism (208) with the energy storage device (210), the conversion mechanism (208) configured to convert input kinetic energy into the elastic potential energy that is stored in the energy storage device (210).

13. The method of claim 12, wherein the energy storage device (210) is coupled with the APU (202) or the jet engine so that no electric voltage or electric current is output by the energy storage device (210) to start the APU (202) or the jet engine.

14. The method of claim 12 or 13, further comprising:
coupling a mechanical actuator with the energy storage device (210) so the mechanical actuator is remotely activated from a flight deck of the aircraft to remotely start the APU (202) or the jet engine with the output kinetic energy from the energy storage device (210).

15. The method of any one of claims 12 to 14, further comprising:
coupling a direct current (DC) gear motor with the conversion mechanism (208) so the DC gear motor winds a mechanical crank of the conversion mechanism (208) to provide the input kinetic energy to the conversion mechanism (208); and preferably
operatively coupling at least one of a position sensor (226) with the mechanical crank or a timing circuit (230) with the DC gear motor, the position sensor (226) configured to measure angular positions of the mechanical crank as the mechanical crank is wound, the timing circuit (230) configured to track time that the DC gear motor is winding the mechanical crank.
